(19)

Europäisches
Patentamt
European
Patent Office
Office européen
des brevets

(11) **EP 4 252 148 B1**

(12) **EUROPEAN PATENT SPECIFICATION**

(45) Date of publication and mention
of the grant of the patent:
**01.04.2026 Bulletin 2026/14**

(21) Application number: **21908995.0**

(22) Date of filing: **23.11.2021**

(51) International Patent Classification (IPC):
**G06V 10/82** $^{(2022.01)}$    **G06V 20/56** $^{(2022.01)}$

(52) Cooperative Patent Classification (CPC):
**G06V 20/588; G06N 3/045; G06N 3/0464;
G06N 3/0495; G06N 3/08; G06N 3/09;
G06V 10/454; G06V 10/762; G06V 10/82;
Y02T 10/40**

(86) International application number:
**PCT/CN2021/132554**

(87) International publication number:
**WO 2022/134996 (30.06.2022 Gazette 2022/26)**

(54) **LANE LINE DETECTION METHOD BASED ON DEEP LEARNING, AND APPARATUS**

FAHRSPURLINIENERKENNUNGSVERFAHREN AUF BASIS VON TIEFENLERNEN UND
VORRICHTUNG

PROCÉDÉ DE DÉTECTION DE LIGNE DE VOIE BASÉ SUR UN APPRENTISSAGE PROFOND ET
APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2020 CN 202011555482**

(43) Date of publication of application:
**04.10.2023 Bulletin 2023/40**

(73) Proprietor: **Zhejiang Dahua Technology Co., Ltd
Hangzhou, Zhejiang 310051 (CN)**

(72) Inventor: **YANG, Xuefeng
Hangzhou, Zhejiang 310051 (CN)**

(74) Representative: **Herrero & Asociados, S.L.
Edificio Aqua - Calle Agustín de Foxá, 4-10, 2ºA
28036 Madrid (ES)**

(56) References cited:
CN-A- 108 009 524    CN-A- 110 276 267
CN-A- 112 036 467    CN-A- 112 287 912

• HOU YUENAN ET AL: "Learning Lightweight
Lane Detection CNNs by Self Attention
Distillation", 2019 IEEE/CVF INTERNATIONAL
CONFERENCE ON COMPUTER VISION (ICCV),
IEEE, 27 October 2019 (2019-10-27), pages 1013 -
1021, XP033723536, DOI: 10.1109/
ICCV.2019.00110
• CHANG DONGHOON ET AL: "Multi-lane
Detection Using Instance Segmentation and
Attentive Voting", 2019 19TH INTERNATIONAL
CONFERENCE ON CONTROL, AUTOMATION
AND SYSTEMS (ICCAS), INSTITUTE OF
CONTROL, ROBOTICS AND SYSTEMS - ICROS,
15 October 2019 (2019-10-15), pages 1538 - 1542,
XP033699068, DOI: 10.23919/
ICCAS47443.2019.8971488
• LI WENHUI ET AL: "A lane detection network
based on IBN and attention", MULTIMEDIA
TOOLS AND APPLICATIONS, KLUWER
ACADEMIC PUBLISHERS, BOSTON, US, vol. 79,
no. 23-24, 10 April 2019 (2019-04-10), pages
16473 - 16486, XP037180442, ISSN: 1380-7501,
[retrieved on 20190410], DOI: 10.1007/
S11042-019-7475-X

EP 4 252 148 B1

• LU JIALIN ET AL: "A Review on Object Detection Based on Deep Convolutional Neural Networks for Autonomous Driving", 2019 CHINESE CONTROL AND DECISION CONFERENCE (CCDC), IEEE, 3 June 2019 (2019-06-03), pages 5301 - 5308, XP033614379, DOI: 10.1109/ CCDC.2019.8832398

**Description**

**CROSS REFERENCE**

**TECHNICAL FIELD**

The present disclosure relates to the field of communication technologies, and in particular to a lane line detection method based on deep learning, an apparatus, a storage medium, and an electronic device.

**BACKGROUND**

With the rapid development of technology and economy, there are more and more cars running on the road, which facilitates people's travel while bringing more and more traffic accidents and traffic congestion problems. Autonomous driving and an intelligent assisted driving system can help a driver process most of road information, provide precise guidance for the driver, and reduce the probability of traffic accidents. An intelligent transportation system can identify the number of vehicles on a lane, determine whether the lane is congested, plan a more reasonable travel route for the driver, and alleviate traffic congestion. In the automatic driving, intelligent driving assistance system and intelligent transportation system, a vision-based lane line detection is very critical and is the basis and core technology for realizing lane departure warning and lane congestion warning.

In the current related technologies, the method for lane line detection requires a large number of training samples and a complex neural network model, resulting in a technical problem that the efficiency of detecting lane lines is very low.

Aiming at the technical problem of low efficiency of detecting lane lines in the related technologies, no effective solution has been proposed yet. Document XP033723536 "Learning Lightweight Lane Detection CNNs by Self Attention Distillation", by HOU YUENAN ET AL discloses a lane detection method using deep learning with a CNN (e.g., ENet, ResNet) for semantic segmentation to output probability maps of lane pixels, followed by post-processing. It employs self-attention distillation (SAD) to refine attention maps layer-wise, improving context capture for sparse lane annotations.

**SUMMARY OF THE DISCLOSURE**

The present disclosure provides a lane line detection method based on deep learning, an apparatus, a storage medium, and an electronic device, to solve the technical problem of low detection accuracy of lane lines in the related art.

In a first aspect, the present disclosure provides a lane line detection method based on deep learning, comprising:obtaining (S202) a first picture that is planned to be detected;obtaining (S204) a target feature map by inputting the first picture into a target neural network model;wherein the target neural network model comprises a neural network model generated based on a multi-scale attention mechanism and a deep separable convolution model, and the target feature map is configured to represent a probability of each pixel in the first picture being a lane line pixel; andobtaining (S206) a target detection result by performing an image post-processing on the target feature map; wherein the target detection result is configured to indicate a detected lane line in the first picture;wherein the obtaining (S204) a target feature map by inputting the first picture into a target neural network model, comprises:obtaining a first feature map by inputting the first picture into a first convolutional layer;obtaining a second feature map by inputting the first feature map into a second convolutional layer, wherein the target neural network model comprises the second convolutional layer, and the second convolutional layer is configured to increase a weight of a preset region in the first feature map based on the multi-scale attention mechanism; andobtaining the target feature map by performing a first preset processing on the second feature map, wherein the first preset processing comprises an up-sampling operation;characterized in that the obtaining a first feature map by inputting the first picture into a first convolutional layer, comprises:obtaining a first sub-feature map by inputting the first picture into a first sub-convolutional layer, wherein the first sub-convolutional layer is configured to perform a convolution operation, and the first convolutional layer comprises the first sub-convolutional layer;obtaining a second sub-feature map by inputting the first sub-feature map into a second sub-convolutional layer, wherein the second sub-convolutional layer is configured to perform a depth separable convolution operation to extract feature information of the first sub-feature map, and the first convolutional layer comprises the second sub-convolutional layer;in response to a resolution of the second sub-feature map being greater than a second preset resolution, reducing a resolution of the first sub-feature map by re-inputting the second sub-feature map into the first sub-convolutional layer; andin response to the resolution of the second sub-feature map being less than or equal to the second preset resolution, determining the second sub-feature map to be the first feature map;the obtaining a second sub-feature map by inputting the first sub-feature map into a second sub-convolutional layer, comprises:obtaining the second sub-feature map by extracting the feature information of the first sub-feature map with a $1 \times n$ convolution kernel and by extracting the feature information of the first sub-feature map with an nx1 convolution kernel, wherein the n is a positive odd number greater than 1;the obtaining (S206) a target detection result by performing an image post-processing on the target feature map, comprises:obtaining a lane line result segmentation map by performing a binarization processing on the target feature map;obtaining a processed lane line result segmentation map containing a plurality of connected domains by preprocessing the lane line result segmentation map with an image erosion operation and an image dilation operation; andobtaining a target detection result by deleting at least one of the plurality of connected domains that does not meet a preset condition and fitting a remaining of the plurality of connected domains that meets a preset condition, wherein a fitted connected domain included in the target detection result represents the detected lane line in the first picture.

In a second aspect, the present disclosure provides a lane line detection apparatus based on deep learning, comprising: an obtaining module (1002), configured to obtain a first picture that is planned to be detected; a first processing module (1004), configured to obtain a target feature map by inputting the first picture into a target neural network model; wherein the target neural network model comprises a neural network model generated based on a multi-scale attention mechanism and a deep separable convolution model, and the target feature map is configured to represent a probability of each pixel in the first picture being a lane line pixel; and a second processing module (1006), configured to obtain a target detection result by performing an image post-processing on the target feature map; wherein the target detection result is configured to indicate a detected lane line in the first picture; wherein in the obtaining a target feature map by inputting the first picture into a target neural network model, the first processing module (1004) is specifically configured to: obtain a first feature map by inputting the first picture into a first convolutional layer; obtain a second feature map by inputting the first feature map into a second convolutional layer, wherein the target neural network model comprises the second convolutional layer, and the second convolutional layer is configured to increase a weight of a preset region in the first feature map based on the multi-scale attention mechanism; and obtain the target feature map by performing a first preset processing on the second feature map, wherein the first preset processing comprises an up-sampling operation; characterized in that in the obtaining a first feature map by inputting the first picture into a first convolutional layer, the first processing module (1004) is specifically configured to: obtain a first sub-feature map by inputting the first picture into a first sub-convolutional layer, wherein the first sub-convolutional layer is configured to perform a convolution operation, and the first convolutional layer comprises the first sub-convolutional layer; obtain a second sub-feature map by inputting the first sub-feature map into a second sub-convolutional layer, wherein the second sub-convolutional layer is configured to perform a depth separable convolution operation to extract feature information of the first sub-feature map, and the first convolutional layer comprises the second sub-convolutional layer; in response to a resolution of the second sub-feature map being greater than a second preset resolution, reduce a resolution of the first sub-feature map by re-inputting the second sub-feature map into the first sub-convolutional layer; and in response to the resolution of the second sub-feature map being less than or equal to the second preset resolution, determine the second sub-feature map to be the first feature map; in the obtaining a second sub-feature map by inputting the first sub-feature map into a second sub-convolutional layer, the first processing module (1004) is specifically configured to: obtain the second sub-feature map by extracting the feature information of the first sub-feature map with a $1 \times n$ convolution kernel and by extracting the feature information of the first sub-feature map with an nx1 convolution kernel, wherein the n is a positive odd number greater than 1; in the obtaining a target detection result by performing an image post-processing on the target feature map, the second processing module (1006) is specifically configured to: obtain a lane line result segmentation map by performing a binarization processing on the target feature map; obtain a processed lane line result segmentation map containing a plurality of connected domains by preprocessing the lane line result segmentation map with an image erosion operation and an image dilation operation; and obtain a target detection result by deleting at least one of the plurality of connected domains that does not meet a preset condition and fitting a remaining of the plurality of connected domains that meets a preset condition, wherein a fitted connected domain included in the target detection result represents the detected lane line in the first picture.

In a third aspect, the present disclosure provides a computer-readable storage medium, storing a computer program; wherein the computer program is configured to perform the method as described when executed.

In a fourth aspect, the present disclosure provides an electronic device, comprising a processor, a memory, and a computer program stored in the memory and executable on the processor; wherein the processor is configured to perform the method as described above when executing the computer program.

In the present disclosure, a first picture that is planned to be detected is obtained; a target feature map is obtained by inputting the first picture into a target neural network model; wherein the target neural network model includes a neural network model generated based on a multi-scale attention mechanism and a deep separable convolution model, and the target feature map is configured to represent a probability of each pixel in the first picture being a lane line pixel; and a target detection result is obtained by performing an image post-processing on the target feature map; wherein the target detection result is configured to indicate a detected lane line in the first picture. Therefore, the problem of low detection accuracy of lane lines in the related art may be solved, thereby increasing the detection efficiency of lane lines, increasing the detection accuracy of lane lines, and reducing the detection cost.

## BRIEF DESCRIPTION OF THE DRAWINGS

The drawings described here are to provide a further understanding of the present disclosure and constitute a part of the present disclosure. The exemplary embodiments and their descriptions of the present disclosure are to explain the present disclosure, and do not constitute an improper limitation of the present disclosure.

FIG. 1 is a block view of a hardware structure of a mobile terminal performing a lane line detection method based on deep learning according to an embodiment of the present disclosure.

FIG. 2 is a flowchart of a lane line detection method based on deep learning according to an embodiment of the present disclosure.

FIG. 3 is a schematic view of a lane line detection method based on deep learning according to an embodiment of the present disclosure.

FIG. 4 is a schematic view of a lane line detection method based on deep learning according to another embodiment of the present disclosure.

FIG. 4a is a schematic view of a lane line detection method based on deep learning according to further another embodiment of the present disclosure.

FIG. 4b is a schematic view of a lane line detection method based on deep learning according to further another embodiment of the present disclosure.

FIG. 4c is a schematic view of a lane line detection method based on deep learning according to further another embodiment of the present disclosure.

FIG. 5 is a schematic view of a lane line detection method based on deep learning according to further another embodiment of the present disclosure.

FIG. 6 is a schematic view of a lane line detection method based on deep learning according to further another embodiment of the present disclosure.

FIG. 7 is a schematic view of a lane line detection method based on deep learning according to further another embodiment of the present disclosure.

FIG. 8 is a schematic view of a lane line detection method based on deep learning according to further another embodiment of the present disclosure.

FIG. 9 is a schematic view of a lane line detection method based on deep learning according to further another embodiment of the present disclosure.

FIG. 10 is a structural block view of a lane line detection apparatus based on deep learning according to an embodiment of the present disclosure.

## DETAILED DESCRIPTION

The embodiments of the present disclosure will be described in detail with reference to the drawings and in conjunction with the embodiments.

It should be noted that the terms "first" and "second" in the specification and claims of the present disclosure and the drawings are used to distinguish similar objects, and not necessarily to describe a specific sequence or order.

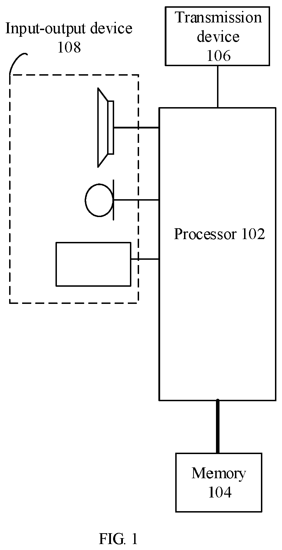

The method embodiments provided in the embodiments of the present application may be executed in a mobile terminal, a computer terminal or a similar computing device. Taking running on a mobile terminal as an example, FIG. 1 is a block view of a hardware structure of a mobile terminal performing a lane line detection method based on deep learning according to an embodiment of the present disclosure. As shown in FIG. 1, the mobile terminal may include one or more (only one is shown in FIG. 1) processor 102 (the processor 102 may include, but is not limited to, a processing device such as a microprocessor MCU or a programmable logic device FPGA) and a memory 104 for storing data. The mobile terminal may also include a transmission device 106 and an input/output device 108 for communication functions. Those skilled in the art can understand that the structure shown in FIG. 1 is only for illustration and does not limit the structure of the mobile terminal. For example, the mobile terminal may also include more or fewer components than shown in FIG. 1, or have a different configuration from that shown in FIG.

The memory 104 may be configured to store computer programs, for example, software programs and modules of application software. Specifically, the memory may store computer programs corresponding to the lane line detection method based on deep learning herein the embodiments of the present disclosure. The processor 102 runs the computer programs stored in the memory 104 to perform various functional applications and data processing, that is, to achieve the above method. The memory 104 may include a high-speed random access memory, and may also include a non-volatile memory, such as one or more magnetic storage devices, flash memory, or other non-volatile solid-state memory. In some examples, the memory 104 may further include a memory remotely arranged relative to the processor 102, and the remote memory may be connected to the mobile terminal through a network. Examples of the network include, but are not limited to, the Internet, corporate intranet, local area network, mobile communication network, and any combination thereof.

The transmission device 106 is configured to receive or send data via a network. Specific examples of the network may include a wireless network provided by a communication provider of the mobile terminal. In some examples, the transmission device 106 includes a network interface adapter (NIC), which can be connected to other network devices through a base station to communicate with the Internet. In some examples, the transmission device 106 may be a radio frequency (RF) module configured to communicate with the Internet in a wireless manner.

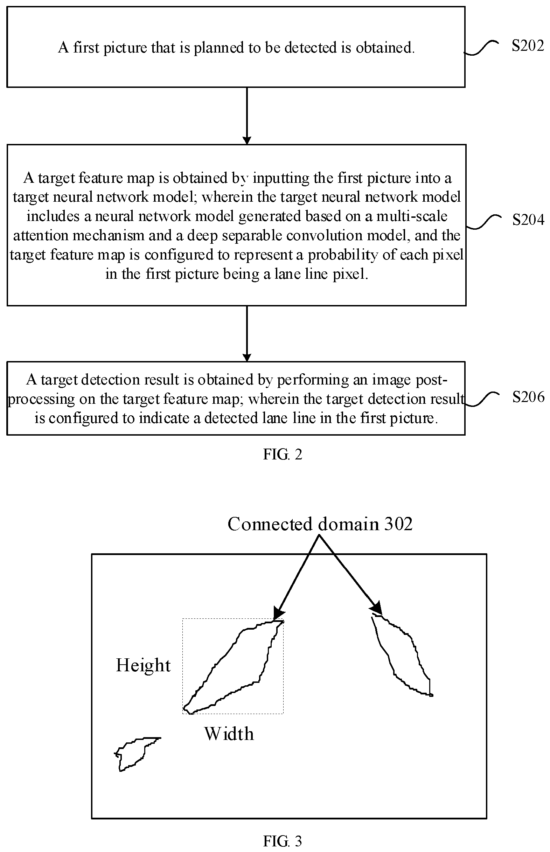

In the embodiments, a lane line detection method based on deep learning running on a mobile terminal, a computer terminal or a similar computing device is provided. FIG. 2 is a flowchart of a lane line detection method based on deep learning according to an embodiment of the present disclosure. The method may include operations at blocks as followed.

At block S202: A first picture that is planned to be detected is obtained.

At block S204: A target feature map is obtained by inputting the first picture into a target neural network model; wherein the target neural network model includes a neural network model generated based on a multi-scale attention mechanism and a deep separable convolution model, and the target feature map is configured to represent a probability of each pixel in the first picture being a lane line pixel.

At block S206: A target detection result is obtained by performing an image post-processing on the target feature map; wherein the target detection result is configured to indicate a detected lane line in the first picture.

In some embodiments, the first picture may include, but is not limited to, a picture collected by an image or video capture device in an automatic driving system, and/or an intelligent assisted driving system, and/or an intelligent transportation system. The first picture may also include but is not limited to a picture pre-stored in a database, or collected through other methods.

In some embodiments, the target neural network model includes, but is not limited to, a convolutional neural network model, a recurrent neural network model, and a combination of one or more neural network models. Specifically, the target neural network model includes, but is not limited to, the neural network model generated based on the multi-scale attention mechanism and the deep separable convolution model.

In some embodiments, the target feature map includes, but is not limited to, a picture generated after feature information is extracted from the first picture. The value of each pixel in the first picture may include, but is not limited to, a probability of the corresponding position of each pixel in the first picture being a target object. The value of each pixel in the first picture may also include, but is not limited to, the probability of each pixel in the first picture being the lane line pixel or a probability of each pixel in the first picture being an image background pixel.

It should be noted that the lane line pixel and the image background pixel may include, but are not limited to, two target objects that are mutually exclusive. In other words, when a pixel is not configured to represent a lane line, the pixel is configured to represent an image background.

In some embodiments, a marked picture may include, but is not limited to, a picture collected by an image or video capture device in an automatic driving system, and/or an intelligent assisted driving system, and/or an intelligent transportation system. The marked picture may also include but is not limited to a picture pre-stored in a database, or collected through other methods.

In some embodiments, the image post-processing may include, but is not limited to, normalization, image smoothing, image sharpening, image dilation, image erosion, or another one or a combination of image processing methods.

The foregoing is only an exemplary description, and the embodiments do not make any specific limitations.

Through the present disclosure, a first picture that is planned to be detected is obtained, and a target feature map is obtained by inputting the first picture into a target neural network model. The target neural network model is a model obtained by training a to-be-trained initial neural network model with a set of marked images. Each marked picture includes a marked image background pixel and a marked lane line pixel. The target feature map is configured to represent a probability of each pixel in the first picture being a lane line pixel, and the target neutral network model is configured to determine a distribution of the probability in the first picture. A target detection result is obtained by performing image post-processing on the target feature map. The target detection result is configured to indicate a detected lane line in the first picture. The target detection result is configured to indicate the lane line detected in the first picture. Therefore, the technical problem of low detection efficiency of lane lines in related technologies may be solved, and the technical effects of improving the detection efficiency of lane lines, increasing the detection accuracy of lane lines, and reducing detection costs may be achieved.

The obtaining the target feature map by inputting the first picture into the target neural network model includes: obtaining a first feature map by inputting the first picture into a first convolutional layer; obtaining a second feature map by inputting the first feature map into a second convolutional layer, wherein the target neural network model includes the second convolutional layer, and the second convolutional layer is configured to increase a weight of a preset region in the first feature map based on the multi-scale attention mechanism; and obtaining the target feature map by performing a first preset processing on the second feature map, wherein the first preset processing includes an up-sampling operation.

In some embodiments, the first preset processing may include, but is not limited to, the up-sampling operation, a feature extraction operation, and other processing methods for generating the target feature map from the second feature map.

In some embodiments, the target neural network model includes the first convolutional layer, and the first convolutional layer is configured to adjust the resolution of the first picture, and to extract the lane line pixel of the first image after the resolution adjustment. The first convolutional layer may also include, but is not limited to, a convolutional neural network for feature extraction, for example, a lightweight convolutional neural network. The lightweight convolutional neural network may perform operations including, but not limited to, a convolution operation with a convolutional kernel in $1\times1$, $3\times3$, $5\times5$, $7\times7$ and other size. The convolution operation may be achieved with a preset sliding step size. For example, the step size may be 1, 2, etc.

The foregoing is only an exemplary description, and the embodiments do not make any specific limitations.

In some embodiments, the obtaining the first feature map by inputting the first picture into the first convolutional layer includes: obtaining the first feature map by inputting the first picture with a resolution less than or equal to a first preset resolution into the first convolutional layer.

In some embodiments, the first preset resolution may be manually set by an operator, and may also set flexibly based on a computational power of the target neural network model or an original resolution of an image or video stream to which the first picture corresponds.

In some embodiments, the obtaining the first feature map by inputting the first picture with a resolution less than or equal to the first preset resolution may include, but is not limited to, inputting a picture with a lower resolution into the first convolutional layer to achieve the technical effect of improving the efficiency of feature extraction.

The foregoing is only an exemplary description, and the embodiments do not make any specific limitations.

The obtaining the first feature map by inputting the first picture into the first convolutional layer includes: obtaining a first sub-feature map by inputting the first picture into a first sub-convolutional layer, wherein the first sub-convolutional layer is configured to perform a convolution operation, and the first convolutional layer includes the first sub-convolutional layer; obtaining a second sub-feature map by inputting the first sub-feature map into a second sub-convolutional layer, wherein the second sub-convolutional layer is configured to perform a depth separable convolution operation to extract feature information of the first sub-feature map, and the first convolutional layer includes the second sub-convolutional layer; in response to a resolution of the second sub-feature map being greater than a second preset resolution, reducing a resolution of the first sub-feature map by re-inputting the second sub-feature map into the first sub-convolutional layer; in response to the resolution of the second sub-feature map being less than or equal to the second preset resolution, determining the second sub-feature map to be the first feature map.

In some embodiments, the first sub-convolutional layer is configured to reduce the resolution of a feature map to improve the efficiency of feature extraction, and the second sub-convolutional layer is configured to perform the depth separable convolution operation to extract the feature information in the first sub-feature map. The second preset resolution may be the same as or different from the first preset resolution.

The foregoing is only an exemplary description, and the embodiments do not make any specific limitations.

The obtaining the second sub-feature map by inputting the first sub-feature map into the second sub-convolutional layer includes: obtaining the second sub-feature map by extracting the feature information of the first sub-feature map with a $1\times n$ convolutional kernel and by extracting the feature information of the first sub-feature map with an $n\times1$ convolutional kernel, wherein the n is a positive odd number greater than 1.

In some embodiments, the first convolutional layer may include, but is not limited to, a special combination of a traditional convolutional neural network and a lightweight convolutional neural network. At the bottom of the above target neural network, due to the relatively large resolution of the input image, usually only a smaller convolutional kernel can be used, resulting in a smaller receptive field of the bottom convolutional kernel, while the use of a larger convolutional kernel will lead to excessive computational cost. By adopting the depth separable convolution with the large convolutional kernel in the second sub-convolutional layer in the first convolutional layer mentioned, and by using $1\times n$ and $n\times1$ convolutions instead of $n\times n$ convolutions, the computational cost of the neural network model is reduced while increasing the receptive field of the target neural network model. For an $n\times n$ convolutional kernel, assuming that the number of input channels is c1 and the number of output channels is c2, the number of parameters of the convolution layer is $n\times n\times c1\times c2$. When the two convolutions of $1\times n$ and $n\times1$ are used instead, the number of parameters of the convolutional layer is $2\times n\times c1 \times c2$, and the number of parameters is reduced by $(n\times n-2\times n)\times c1\times c2$. Therefore, the greater the value of n, the more obvious the effect of reducing the number of parameters, while the receptive field remains unchanged.

The foregoing is only an exemplary description, and the embodiments do not make any specific limitations.

In some embodiments, the obtaining the second feature map by inputting the first feature map into the second convolutional layer includes: obtaining a first type feature map and a plurality of second type feature maps by inputting the first feature map into the second convolutional layer and by performing a convolution operation on the first feature map with a plurality of convolutional kernels of different sizes included in the second convolution layer; determining a plurality of third type feature maps from the plurality of second type feature maps through a preset statistical method, wherein the plurality of third type feature maps are configured to be performed with a second preset processing such that sizes of the plurality of third type feature maps match each other, the plurality of third type feature maps are configured to be performed with a third preset processing to obtain an attention feature map, and a size of the attention feature map matches a size of the first type feature map; and obtaining the second feature map by performing the third preset processing on the attention feature map and the first type feature map.

In some embodiments, the plurality of second type feature maps may include, but are not limited to, second type feature maps obtained by performing a convolution operation on the first feature map with a plurality of convolutional kernels of different sizes.

In some embodiments, the preset statistical method may include, but is not limited to, norm formulas in statistics. Specifically, the preset statistical method may include, but is not limited to, vector norms, matrix norms, etc.

In some embodiments, the second preset processing may include, but is not limited to, calling a function to adjust the number of channels of a feature map, for example, a reshape operation to adjust the number of rows or columns of a feature vector corresponding to the feature map.

In some embodiments, the obtaining the second feature map by inputting the first feature map into the second convolutional layer may also include, but is not limited to, increasing a weight of an important region in the first feature map by the multi-scale attention mechanism in a region close to an output layer of the neural network model (for example, the weight of the important region in the first feature map includes but is not limited to a weight of a related region at which a lane line is prone to appear), thereby improving the detection accuracy of the neural network model.

Specifically, assuming that the resolution of the first feature map is w, h, and the number of channels is c. First, the first feature map is performed with convolution operations with convolutional kernels including but not limited to three convolutional kernels of different scales ($1\times1$, $3\times3$, and $5\times5$, corresponding to the aforementioned plurality of convolutional kernels of different sizes) respectively. The use of the different convolutional kernels is to fuse information of lane line elements at different receptive field scales. Three feature maps are output, specifically including two second type feature maps and one first type feature map. While the resolution remains unchanged, and the number of channels is $0.5\times c$, $0.5\times c$, and c, respectively. The $3\times3$ and $5\times5$ second type feature maps are configured to calculate a correlation between elements to determine the importance of each pixel position in the feature map for global inference. Then element value at each position is counted from channel dimensions using a statistical method. A calculation formula may be as follows.

$$x = \sum_{i=0}^{c} \mathrm{abs}\left(x_i\right)$$

where x is a counted element value, $x_i$ is element values on different channels at a same location. After calculation, the resolution of the output feature map remains unchanged, and the number of channels becomes 1. Then, operations may include, but are not limited to, processing the output feature map into $(w\times h)\times1$ and $1\times(w\times h)$ (corresponding to the aforementioned third type feature maps) through the reshape function (corresponding to the second preset processing), obtaining a matrix with a dimension of $(w\times h)\times(w\times h)$ through matrix multiplication (corresponding to the third preset processing) of the $(w\times h)\times1$ and $1\times(w\times h)$ feature maps, obtaining the attention feature map by performing a softmax operation on the matrix, processing a feature map generated by the $1\times1$ convolutional kernel (corresponding to the aforementioned first type feature map) into a dimension of $c\times(w\times h)$ through the reshape function, obtaining another matrix with a dimension of $c\times(w\times h)$ by performing matrix multiplication of the processed feature map and the attention feature map, processing the another matrix into a $c\times w\times h$ feature map through the reshape function, and taking the processed another matrix as the second feature map.

It should be noted that, in middle and top layers of the target neural network, the dimension of the output feature is greatly reduced compared to the bottom of the target neural network. Ordinary convolution is used for feature extraction, and the convolutional kernel is adopted with a larger kernel to continue to maintain the receptive field of the convolutional kernel. $1\times n$ and $n\times1$ convolutions are adopted instead of $n\times n$ convolution to reduce the network computational cost.

The foregoing is only an exemplary description, and the embodiments do not make any specific limitations.

Through the embodiments, the target neural network generated based on the attention mechanism enables the output target feature map to more effectively and accurately reflect each pixel corresponding to the position of the each pixel in the input image, and achieve the detection accuracy of lane lines.

In some embodiments, before the obtaining the target feature map by inputting the first picture into the target neural network model, the method further includes: obtaining a first sample picture and a label picture corresponding to the first sample picture; and obtaining the target neural network model by training a to-be-trained initial neutral network model with the first sample picture and the label picture, wherein the target neural network model is configured to be trained through a loss function as follows.

$$loss = C\left(l_p, l_t\right) + \alpha\, C\left(b_p,\ b_t\right)$$

where C represents a cross entropy loss function, $l_p$ represents the lane line pixel obtained by inputting the first sample picture into the to-be-trained initial neural network model, $l_t$ represents the lane line pixel marked by the label picture, $b_p$

represents the image background pixel obtained by inputting the first sample picture into the to-be-trained initial neural network model, $b_t$ represents the image background pixel marked by the label picture, and $\alpha$ is a preset parameter greater than 0.

In some embodiments, since the number of the image background pixels is usually far greater than the number of the lane line pixels, the preset $\alpha$ is configured to alleviate the impact of category imbalance. During the training process, the $\alpha$ may be set to be 0.1.

In some embodiments, during the training process of the initial neural network model, operations may include, but are not limited to, configuring an initial learning rate to a preset value, for example, 0.01; configuring a learning rate attenuation strategy to a preset strategy, for example, every 10,000 iterations, a learning rate is multiplied by 0.1; and configuring a total number of iterations to another preset value, for example, 60,000 iterations.

The foregoing is only an exemplary description, and the embodiments do not make any specific limitations.

The obtaining the target detection result by performing the image post-processing on the target feature map includes: obtaining a lane line result segmentation map by performing a binarization processing on the target feature map; obtaining a processed lane line result segmentation map containing a plurality of connected domains by preprocessing the lane line result segmentation map with an image erosion operation and an image dilation operation; obtaining a target detection result by deleting at least one of the plurality of connected domains that does not meet a preset condition and fitting the remaining of the plurality of connected domains that meets a preset condition to obtain a fitted connected domain, wherein the fitted connected domain included in the target detection result represents a detected lane line in the first picture.

In some embodiments, the binarization processing may include, but is not limited to, obtaining the lane line result segmentation map by marking an original image based on the target feature map; wherein a part predicted to be the lane line pixel is marked as 1, and another part predicted not to be a lane line, that is, to be the background pixel, is marked as 0.

It should be noted that FIG. 3 is a schematic view of a lane line detection method based on deep learning according to an embodiment of the present disclosure. As shown in FIG. 3, the lane line pixel may be filtered by performing operations including but not limited to the following operations.

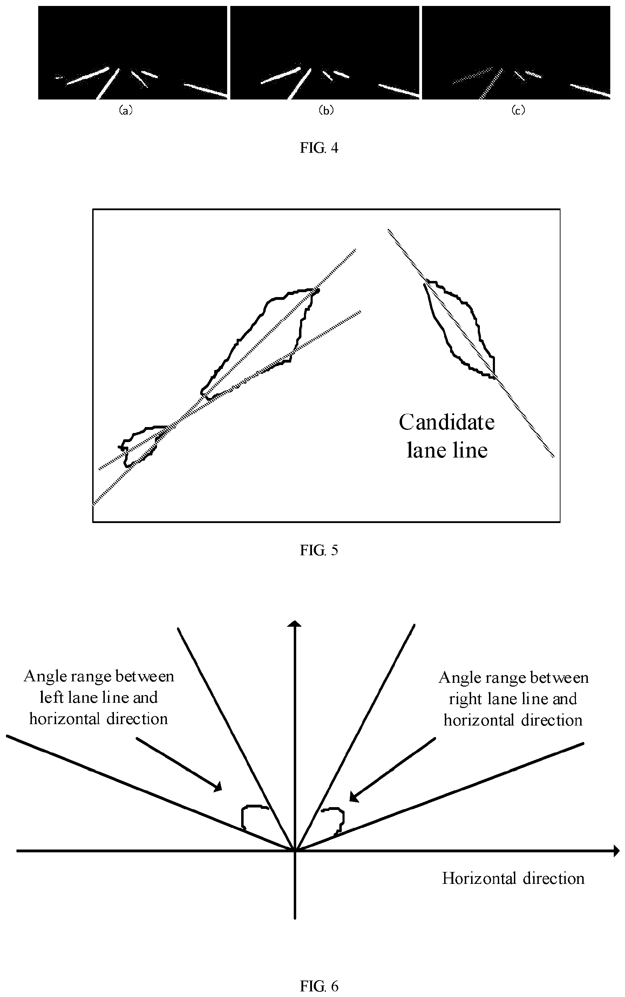

Operation S1: A width and a height of a circumscribed rectangle of each connected domain 302 are calculated. When the width and height are each less than a corresponding threshold, the connected domain is likely not to be a lane line pixel position, and the connected domain is directly deleted. A scenario before the filtering the lane line pixel may be shown in FIG. 4a, and a result of the filtering the lane line pixel may be shown in FIG. 4b.

Operation S2: On a processed probability map, each different connected domain may be marked with a different digital id through a Skimage library, representing different lane lines. A result after the processing may be shown in FIG. 4c. The lane line pixels represented by different brightness belong to different lane lines.

Operation S3: FIG. 5 is a schematic view of a lane line detection method based on deep learning according to further another embodiment of the present disclosure. As shown in FIG. 5, after the connected domains of different ids are obtained, a function $y=kx+b$ is applied to fit each connected domain separately, where k is the slope and b is the intercept, thereby obtaining a lane line model corresponding to each connected domain as a candidate lane line 502.

For example, due to the perspective effect, when parallel lane lines in a three-dimensional space are projected into a two-dimensional space, an angle between each lane line and a horizontal direction will be within a certain range. FIG. 6 is a schematic view of a lane line detection method based on deep learning according to further another embodiment of the present disclosure. As shown in FIG. 6, the range of the angle is required to be determined according to the camera's installation position and focal length parameters. Then, according to the slope of each lane line, the candidate lane lines of which the angle is not within the range are continued to be filtered.

In some embodiments, the preprocessing of the image erosion operation and the image dilation operation may include but is not limited to one or more operations to obtain the target feature map containing the plurality of connected domains. The preset condition may include but is not limited to a determination based on the size, length and other shape characteristics of the connected domains. For example, by setting a preset length threshold and a preset width threshold, a connected domain is deleted in response to the length of the connected domain being less than the preset length threshold and/or the width of the connected domain being less than the preset width threshold, and the target feature map containing the connected domains that meet the preset condition is retained to determine the final target detection result.

For example, in some complex road scenes, the lane line features recorded in the target feature map output by the aforementioned target neural network model may show some discontinuities, as shown in FIG. 4a. The scattered and small area lane line prediction pixels may be eliminated using including but not limited to the image erosion operation in OpenCV, because the scattered and small area of lane line prediction pixels are likely to be falsely detected. The prediction pixel area for remaining lane lines is then increased using the image dilation operation in OpenCV, and finally, the connected domains that do not belong to the lane lines are filtered out by configuring the size of the connected domains.

The foregoing is only an exemplary description, and the embodiments do not make any specific limitations.

In some embodiments, the method further includes:
re-determining the detected lane line in the first picture by like-for-like merging the fitted connected domains contained in the target detection result by a clustering algorithm.

In some embodiments, operations may include, but are not limited to, leaving a plurality of lane lines after filtering the non-lane lines. Some candidate lane lines belong to different parts of the same lane line, as shown in the left side of FIG. 5. The two candidate lane lines in the left belong to the same lane line logically, and these lane lines are required to be merged. Clustering is performed using the slope of each candidate lane line. The clustering algorithm used may include, but is not limited to, a mean drift clustering algorithm, which may be implemented by sklearn.cluster.MeanShift function. A clustering radius is required to be determined based on the camera installation location and focal length parameters. The number of clustering centers obtained is the number of lane lines, and the equation of each lane line after merging is as follows.

$$y = \frac{1}{n}\sum\nolimits_{i=1}^{n} k_i x + \frac{1}{n}\sum\nolimits_{i=0}^{n} b_i$$

where n indicates the number of candidate lane lines being merged into the lane line, and $k_i$ and $b_i$ indicate the slope and intercept of the i-th candidate lane line respectively.

The foregoing is only an exemplary description, and the embodiments do not make any specific limitations.

In some embodiments, the target neural network model includes a neural network model including a lightweight convolutional neural network.

The foregoing is only an exemplary description, and the embodiments do not make any specific limitations.

The following will further explain the embodiments in combination with specific examples.

The target neural network model architecture may be adopted with a special combination of a traditional convolutional neural network model and a lightweight convolutional neural network model. At the bottom of the above target neural network model, due to the relatively large resolution of the input image, usually only a smaller convolutional kernel can be used, resulting in a smaller receptive field of the bottom convolutional kernel, while the use of a larger convolutional kernel will lead to excessive computational cost. In the present disclosure, the depth separable convolution of a large convolutional kernel is used at the bottom of the target neural network model, such that the computational cost of the neural network model is reduced while increasing the receptive field of the target neural network model. For an $n \times n$ convolutional kernel, assuming that the number of input channels is c1 and the number of output channels is c2, the number of parameters of the convolution layer is $n \times n \times c1 \times c2$. When the two convolutions of $1 \times n$ and $n \times 1$ are used instead, the number of parameters of the convolutional layer is $2 \times n \times c1 \times c2$, and the number of parameters is reduced by $(n \times n - 2 \times n) \times c1 \times c2$. Therefore, the greater the value of n, the more obvious the effect of reducing the number of parameters, while the receptive field remains unchanged.

In the middle and top layers of the target neural network model, the dimensionality of the feature map is greatly reduced compared to the bottom of the target neural network model. Ordinary convolution is used for feature extraction, and the convolutional kernel is adopted with a larger kernel to continue to maintain the receptive field of the convolutional kernel. $1 \times n$ and $n \times 1$ convolutions are adopted instead of $n \times n$ convolution to reduce the computational cost of the target neural network model.

The target neural network model structure is shown in Table 1.

Table 1

| Input | Operation | Convolutional kernel k | Sliding step size s | Number n | Number of output channels c | Convolution kernel void rate |
|---|---|---|---|---|---|---|
| 320×18-4×3 | Conv2d,bn,relu | 3 | 2 | 1 | 32 | - |
| 160×92×-32 | dewConvSP | 5 | 1 | 3 | 64 | - |
| 160×92×-64 | Conv2d,bn,relu | 3 | 2 | 1 | 128 | - |
| 80×46×1-28 | dewConvSP | 5 | 1 | 3 | 128 | - |
| 80×46×1-28 | Conv2d,bn,relu | 3 | 2 | 1 | 256 | - |

(continued)

| Input | Operation | Convolutional kernel k | Sliding step size s | Number n | Number of output channels c | Convolution kernel void rate |
|---|---|---|---|---|---|---|
| 40×23×2-56 | dewConvSP | 5 | 1 | 3 | 512 | 2 |
| 40×23×5-12 | attention | - | 1 | 1 | 512 | - |
| 40×23×5-12 | Tranconv2d,bn,relu | 3 | 2 | 1 | 256 | - |
| 80×46×2-56 | dewConvSP | 5 | 1 | 3 | 64 | 2 |
| 80×46×64 | Tranconv2d,bn | 3 | 2 | 1 | 2 | - |
| 160×92×2 | upsample×2 | - | - | 1 | 2 | - |

Among them, the above dewConvSP convolution operation may include but is not limited to the content shown in Table 2.

Table 2

| Input | Operation | Convolutional kernel k | Sliding step size s | Number of output channels c |
|---|---|---|---|---|
| w×h×c | dewConv2d,relu | 1×k | s | c |
| w×h×c | dewConv2d,bn,relu | k×1 | s | c |

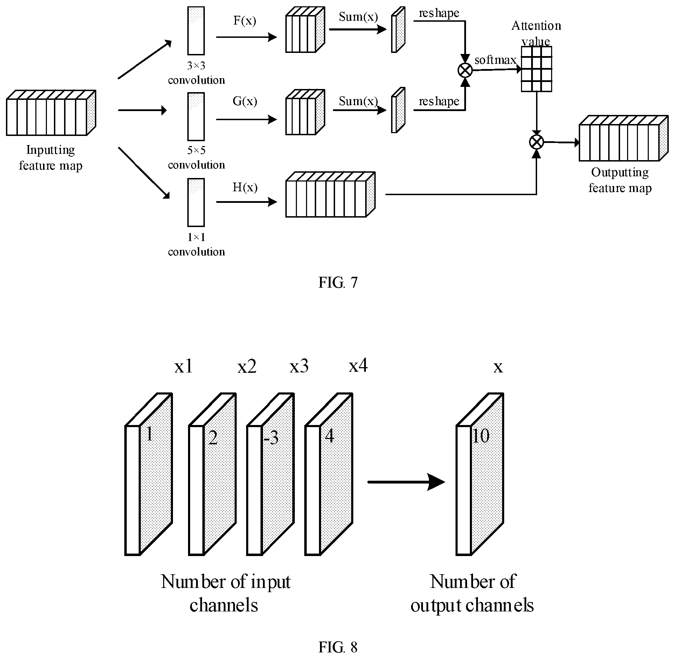

In some embodiments, near the output layer of the target neural network model, a multi-scale attention mechanism is configured to increase the weight of the important region on the feature map (corresponding to the attention convolutional layer in Table 1). To improve the accuracy of target neural network model detection, the calculation flowchart of the proposed attention mechanism is shown in FIG. 7.

S702: The feature map output by a previous convolutional layer (corresponding to the aforementioned first feature map) is input, assuming that the resolution of the first feature map is w, h, and the number of channels is c.

S704: A convolution operation is performed on the input image using three convolutional kernels of different scales, wherein the use of the different convolutional kernels is to fuse information of lane line elements at different receptive field scales. Three feature maps are output, the resolution remains unchanged, and the number of channels is $0.5×c$, $0.5×c$, and c (from top to bottom).

S706: First two feature maps are configured to calculate the correlation between elements. In order to determine the importance of each location to the global inference. Then element value at each position is counted from channel dimensions using a statistical method. A calculation formula may be as follows.

$$x = \sum_{i=0}^{c} \mathrm{abs}(x_i)$$

The foregoing calculation process schematic diagram may include, but is not limited to, as shown in FIG. 8: where x is a counted element value, $x_i$ is element values on different channels at a same location. Taking i equal to 4 as an example, after calculation, the resolution of the output feature map remains unchanged, and the number of channels becomes 1. Then the output feature map is processed into (w×h)×1 and 1×(w×h) through the reshape function, a matrix with a dimension of (w×h)×(w×h) is obtained through matrix multiplication, and the attention feature map is obtained by performing a softmax operation on the matrix.

S708: a feature map generated by H(x) is processed into a dimension of c×(w×h) through the reshape function, another matrix with a dimension of c×(w×h) is obtained by performing matrix multiplication of the processed feature map and the attention feature map, the another matrix is processed into a c×w×h feature map through the reshape function, and the processed another matrix is taken as the second feature map.

In some embodiments, for all convolution operations in the target neural network model (corresponding to Table 1), as long as the sliding step size is 1, the feature map will be filled with 0 around it before the convolution operation, ensuring that the resolution of the output feature map remains unchanged after the convolution operation. The input of the network is an RGB three-channel color image. The original image is resized to $320 \times 184 \times 3$ using a bilinear interpolation, and the label image is resized to $320 \times 184$ using a nearest neighbor interpolation algorithm. After a series of convolution processing, the result of lane line segmentation (corresponding to a picture in which each pixel indicates the probability value of whether the location of that pixel is a lane line or not) with the same resolution as the input image. The two channels represent the image background pixel location information and lane line pixel location information, respectively. The loss function used for model training is cross entropy with weights, with the following equation.

$$loss = C\left(l_p, l_t\right) + \alpha\ C\left(b_p,\ b_t\right)$$

where C represents a cross entropy loss function, $l_p$ represents the lane line pixel obtained by inputting the first sample picture into the to-be-trained initial neural network model, $l_t$ represents the lane line pixel marked by the label picture, $b_p$ represents the image background pixel obtained by inputting the first sample picture into the to-be-trained initial neural network model, $b_t$ represents the image background pixel marked by the label picture, and $\alpha$ is a preset parameter greater than 0.

It should be noted that since background pixels are usually far more than lane line pixels, $\alpha$ is configured to alleviate the impact of category imbalance, and $\alpha$ may be set to 0.1 during training. The initial learning rate used in training is 0.01. The learning rate decay strategy is that every 10,000 iterations, a learning rate is multiplied by 0.1, and the total number of iterations is set to 60,000.

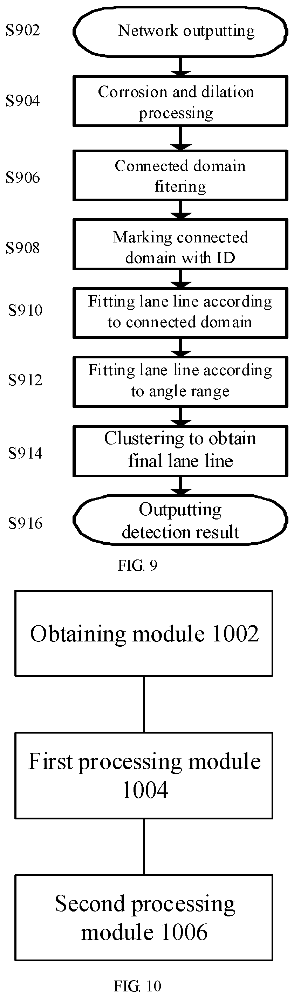

After the aforementioned target neural network model outputs the results of the probability map of the lane line segmentation results, the image post-processing and statistical methods are configured to filter the falsely detected lane lines and merge the lane lines. The processing flow chart is shown in FIG. 9. The specific steps may be as follows.

S902: the target neural network model outputs the target feature map;
S904: corrosion and dilation processing are performed on the target feature map;
S906: the connected domains are filtered;
S908: the connected domains are each marked with an ID;
S910: the lane lines are fitted according to the connected domains;
S912: the lane lines are filtered according to the angle range;
S914: clustering is performed to obtain the final lane line;
S916: the detection result is output.

Among them, in some complex road scenes, the lane line features recorded in the target feature map output by the aforementioned target neural network model may show some discontinuities, as shown in FIG. 4a. The scattered and small area lane line prediction pixels may be eliminated using including but not limited to the image erosion operation in OpenCV, because the scattered and small area of lane line prediction pixels are likely to be falsely detected. The prediction pixel area for remaining lane lines is then increased using the image dilation operation in OpenCV, and finally, the connected domains that do not belong to the lane lines are filtered out by configuring the size of the connected domains.

It should be noted that the above lane line pixels can be filtered by including but not limited to the following methods:

S1: A width and a height of a circumscribed rectangle of each connected domain 302 as shown in FIG. 3 are calculated. When the width and height are each less than a corresponding threshold, the connected domain is likely not to be a lane line pixel position, and the connected domain is directly deleted. A result after the lane line pixel is processed may be shown in FIG. 4b. The connected domains shown in FIG. 4b do not include part of the connected domains included in FIG. 4a.
S2: On a processed probability map, each different connected domain may be marked with a different digital id through a Skimage library, representing different lane lines. A result after the processing may be shown in FIG. 4c. The lane line pixels represented by different brightness belong to different lane lines.
S3: After the connected domains of different ids are obtained, a function y=kx+ b is applied to fit each connected domain separately, where k is the slope and b is the intercept, thereby obtaining a lane line model corresponding to each connected domain as a candidate lane line 502 as shown in FIG. 5.

For example, due to the perspective effect, when parallel lane lines in a three-dimensional space are projected into a two-dimensional space, an angle between each lane line and a horizontal direction will be within a certain range. As shown in FIG. 6, the range of the angle is required to be determined according to the camera's installation position and focal length parameters. Then, according to the slope of each lane line, the candidate lane lines of which the angle is not within the range are continued to be filtered.

A plurality of lane lines may be left after filtering the non-lane lines. Some candidate lane lines belong to different parts of the same lane line, as shown in the left side of FIG. 5. The two candidate lane lines in the left belong to the same lane line logically, and these lane lines are required to be merged. Clustering is performed using the slope of each candidate lane line. The clustering algorithm used may include, but is not limited to, a mean drift clustering algorithm, which may be implemented by sklearn.cluster.MeanShift function. A clustering radius is required to be determined based on the camera installation location and focal length parameters. The number of clustering centers obtained is the number of lane lines, and the equation of each lane line after merging is as follows.

$$ y = \frac{1}{n} \sum\nolimits_{i=1}^{n} k_i x + \frac{1}{n} \sum\nolimits_{i=0}^{n} b_i $$

where n indicates the number of candidate lane lines being merged into the lane line, and $k_i$ and $b_i$ indicate the slope and intercept of the i-th candidate lane line respectively.

With this embodiment, a target neural network model based on a multi-scale attention mechanism is used for the lane line detection task, a lightweight lane line detection network is designed based on the characteristics of each layer of the deep neural network to achieve the use of a lightweight deep neural network in the lane line detection task, which reduces the complexity and computational cost of the network, has advantages when arranged in embedded devices with limited storage capacity and computational power, increases the receptive field of the target neural network model, and alleviates the problem of predicted lane line pixel discontinuity in the lane line segmentation task. Moreover, combined with the output format of the target neural network model, a set of post-processing algorithms may be designed that can accurately detect lane lines based on the coarse extraction of lane line features by the deep neural network, reducing the network's requirement for training datasets. For example, the training can be performed on some general datasets, and the requirement of roughly extracting lane line features can be achieved without specifically collecting the corresponding road scenes for labeling, which reduces the cost of practical application of the algorithm.

From the description of the above embodiments, it will be clear to those skilled in the art that the method according to the above embodiments can be implemented with the aid of software plus the necessary general purpose hardware platform, or of course by means of hardware, but in many cases the former is the better way of implementation. Based on this understanding, the technical solution of the present disclosure, which essentially or rather contributes to the prior art, may be embodied in the form of a software product, which is stored in a storage medium (e.g. ROM/RAM, disk, CD-ROM) and includes a number of instructions to enable a terminal device (which may be a cell phone, a computer, a server, or a network device, etc.) to perform the method described in various embodiments of the present disclosure.

The present disclosure also provides a lane line detection apparatus based on deep learning, which is configured to implement the aforementioned embodiments and preferred implementations, and what has been explained will not be repeated. As mentioned below, the term "module" may implement a combination of software and/or hardware with predetermined functions. Although the apparatus described in the following embodiments is preferably implemented by software, hardware or a combination of software and hardware is also possible and conceived.

FIG. 10 is a structural block view of a lane line detection apparatus based on deep learning according to an embodiment of the present disclosure. As shown in FIG. 10, the apparatus includes:

an obtaining module 1002, configured to obtain a first picture that is planned to be detected;
a first processing module 1004, configured to obtain a target feature map by inputting the first picture into a target neural network model; wherein the target neural network model includes a neural network model generated based on a multi-scale attention mechanism and a deep separable convolution model, and the target feature map is configured to represent a probability of each pixel in the first picture being a lane line pixel;
a second processing module 1006, configured to obtain a target detection result by performing an image post-processing on the target feature map; wherein the target detection result is configured to indicate a detected lane line in the first picture.

In some embodiments, the first processing module 1004 includes:

a first calculation unit, configured to obtain a first feature map by inputting the first picture into a first convolutional layer; wherein the target neural network model includes the first convolutional layer, and the first convolutional layer is configured to adjust a resolution of the first picture and to extract the lane line pixel of the first image after the resolution adjustment;
a second calculation unit, configured to obtain a second feature map by inputting the first feature map into a second convolutional layer; wherein the target neural network model includes the second convolutional layer, and the second convolutional layer is configured to increase a weight of a preset region in the first feature map based on the multi-scale attention mechanism; and

a first processing unit, configured to obtain the target feature map by performing a first preset processing on the second feature map; wherein the first preset processing includes an up-sampling operation.

In some embodiments, the aforementioned apparatus is configured to input the first picture into the first convolutional layer in the following manner to obtain the first feature map: obtaining the first feature map by inputting the first picture with a resolution less than or equal to a first preset resolution into the first convolutional layer.

In some embodiments, he aforementioned apparatus is configured to input the first picture into the first convolutional layer in the following manner to obtain the first feature map: obtaining a first sub-feature map by inputting the first picture into a first sub-convolutional layer, wherein the first sub-convolutional layer is configured to perform a convolution operation, and the first convolutional layer includes the first sub-convolutional layer; obtaining a second sub-feature map by inputting the first sub-feature map into a second sub-convolutional layer, wherein the second sub-convolutional layer is configured to perform a depth separable convolution operation to extract feature information of the first sub-feature map, and the first convolutional layer includes the second sub-convolutional layer; in response to a resolution of the second sub-feature map being greater than a second preset resolution, reducing a resolution of the first sub-feature map by re-inputting the second sub-feature map into the first sub-convolutional layer; in response to the resolution of the second sub-feature map being less than or equal to the second preset resolution, determining the second sub-feature map to be the first feature map.

In some embodiments, the first calculation unit is configured to input the first sub-feature map into the second sub-convolutional layer in the following manner to obtain the second sub-feature map: obtaining the second sub-feature map by extracting the feature information of the first sub-feature map with a $1 \times n$ convolutional kernel and by extracting the feature information of the first sub-feature map with an $n \times 1$ convolutional kernel, wherein the n is a positive odd number greater than 1.

In some embodiments, the second calculation unit is configured to input the first feature map into the second convolutional layer in the following manner to obtain the second feature map: obtaining a first type feature map and a plurality of second type feature maps by inputting the first feature map into the second convolutional layer and by performing a convolution operation on the first feature map with a plurality of convolutional kernels of different sizes included in the second convolution layer; determining a plurality of third type feature maps from the plurality of second type feature maps through a preset statistical method, wherein the plurality of third type feature maps are configured to be performed with a second preset processing such that sizes of the plurality of third type feature maps match each other, the plurality of third type feature maps are configured to be performed with a third preset processing to obtain an attention feature map, and a size of the attention feature map matches a size of the first type feature map; and obtaining the second feature map by performing the third preset processing on the attention feature map and the first type feature map.

In some embodiments, the apparatus is further configured to obtain a first sample picture and a label picture corresponding to the first sample picture; and

obtain the target neural network model by training a to-be-trained initial neutral network model with the first sample picture and the label picture, wherein the target neural network model is configured to be trained through a loss function as follows.

$$ loss = C\left(l_p, l_t\right) + \alpha \; C(b_p, \; b_t) $$

where C represents a cross entropy loss function, $l_p$ represents the lane line pixel obtained by inputting the first sample picture into the to-be-trained initial neural network model, $l_t$ represents the lane line pixel marked by the label picture, $b_p$ represents the image background pixel obtained by inputting the first sample picture into the to-be-trained initial neural network model, $b_t$ represents the image background pixel marked by the label picture, and $\alpha$ is a preset parameter greater than 0.

In some embodiments, the second processing module 1006 includes:

a second processing unit, configured to obtain a lane line result segmentation map by performing a binarization processing on the target feature map;

a third processing unit, configured to obtain a processed lane line result segmentation map containing a plurality of connected domains by preprocessing the lane line result segmentation map with an image erosion operation and an image dilation operation;

a fourth processing unit, configured to obtain a target detection result by deleting at least one of the plurality of connected domains that does not meet a preset condition and fitting the remaining of the plurality of connected domains that meets a preset condition to obtain a fitted connected domain, wherein the fitted connected domain included in the target detection result represents a detected lane line in the first picture.

In some embodiments, the apparatus is further configured to:
re-determine the detected lane line in the first picture by like-for-like merging the fitted connected domains contained in the target detection result by a clustering algorithm.

In some embodiments, the target neural network model includes a neural network model including a lightweight convolutional neural network.

It should be noted that each of the above modules can be implemented by software or hardware. For the latter, it can be implemented in the following way, but not limited to: the above modules are all located in the same processor; or, each of the above modules is located in a different processor in any combination.

An embodiment of the present disclosure also provides a computer-readable storage medium in which a computer program is stored, wherein the computer program is configured to execute the steps in any one of the foregoing method embodiments when executed.

In this embodiment, the computer-readable storage medium may be configured to store a computer program for executing the following steps:

S1: A first picture that is planned to be detected is obtained.
S2. A target feature map is obtained by inputting the first picture into a target neural network model; wherein the target neural network model includes a neural network model generated based on a multi-scale attention mechanism and a deep separable convolution model, and the target feature map is configured to represent a probability of each pixel in the first picture being a lane line pixel.
S3: A target detection result is obtained by performing an image post-processing on the target feature map; wherein the target detection result is configured to indicate a detected lane line in the first picture.

In some embodiments, the foregoing computer-readable storage medium may include, but is not limited to, a USB flash drive, a read-only memory (ROM), a random access memory (RAM), a mobile hard drive, a magnetic disk or an optical disk and other media that can store computer programs.

An embodiment of the present disclosure also provides an electronic device, including a memory and a processor, the memory stores a computer program, and the processor is configured to run the computer program to execute the steps in any of the foregoing method embodiments.

In some embodiments, the aforementioned electronic device may further include a transmission device and an input-output device, wherein the transmission device is connected to the processor, and the input-output device is connected to the processor.

In some embodiments, the processor may be configured to execute the following steps through a computer program:

S1: A first picture that is planned to be detected is obtained.
S2. A target feature map is obtained by inputting the first picture into a target neural network model; wherein the target neural network model includes a neural network model generated based on a multi-scale attention mechanism and a deep separable convolution model, and the target feature map is configured to represent a probability of each pixel in the first picture being a lane line pixel.
S3: A target detection result is obtained by performing an image post-processing on the target feature map; wherein the target detection result is configured to indicate a detected lane line in the first picture.

For specific examples in this embodiment, reference may be made to the examples described in the aforementioned embodiments and exemplary implementations, which will not be repeated here.

Clearly, it should be understood by those skilled in the art that the modules or steps of the present disclosure described above may be implemented with a generic computing device, they may be centralized on a single computing device or distributed on a network of multiple computing devices, they may be implemented with program code executable by the computing device, thus, they may be stored in a storage device to be executed by the computing device. In some cases, the steps shown or described may be executed in a different order than herein, or they may be implemented separately as individual integrated circuit modules, or multiple modules or steps thereof may be implemented as individual integrated circuit modules. In this way, the present disclosure is not limited to any particular combination of hardware and software.

Claims

1. A lane line detection method based on deep learning, comprising:

obtaining (S202) a first picture that is planned to be detected;
obtaining (S204) a target feature map by inputting the first picture into a target neural network model; wherein the target neural network model comprises a neural network model generated based on a multi-scale attention mechanism and a deep separable convolution model, and the target feature map is configured to represent a probability of each pixel in the first picture being a lane line pixel; and
obtaining (S206) a target detection result by performing an image post-processing on the target feature map; wherein the target detection result is configured to indicate a detected lane line in the first picture;
wherein the obtaining (S204) a target feature map by inputting the first picture into a target neural network model, comprises:

obtaining a first feature map by inputting the first picture into a first convolutional layer;
obtaining a second feature map by inputting the first feature map into a second convolutional layer, wherein the target neural network model comprises the second convolutional layer, and the second convolutional layer is configured to increase a weight of a preset region in the first feature map based on the multi-scale attention mechanism; and
obtaining the target feature map by performing a first preset processing on the second feature map, wherein the first preset processing comprises an up-sampling operation;
**characterized in that** the obtaining a first feature map by inputting the first picture into a first convolutional layer, comprises:

obtaining a first sub-feature map by inputting the first picture into a first sub-convolutional layer, wherein the first sub-convolutional layer is configured to perform a convolution operation, and the first convolutional layer comprises the first sub-convolutional layer;
obtaining a second sub-feature map by inputting the first sub-feature map into a second sub-convolutional layer, wherein the second sub-convolutional layer is configured to perform a depth separable convolution operation to extract feature information of the first sub-feature map, and the first convolutional layer comprises the second sub-convolutional layer;
in response to a resolution of the second sub-feature map being greater than a second preset resolution, reducing a resolution of the first sub-feature map by re-inputting the second sub-feature map into the first sub-convolutional layer; and
in response to the resolution of the second sub-feature map being less than or equal to the second preset resolution, determining the second sub-feature map to be the first feature map;
the obtaining a second sub-feature map by inputting the first sub-feature map into a second sub-convolutional layer, comprises:

obtaining the second sub-feature map by extracting the feature information of the first sub-feature map with a $1 \times n$ convolution kernel and by extracting the feature information of the first sub-feature map with an $n \times 1$ convolution kernel, wherein the n is a positive odd number greater than 1;
the obtaining (S206) a target detection result by performing an image post-processing on the target feature map, comprises:

obtaining a lane line result segmentation map by performing a binarization processing on the target feature map;
obtaining a processed lane line result segmentation map containing a plurality of connected domains by preprocessing the lane line result segmentation map with an image erosion operation and an image dilation operation; and
obtaining a target detection result by deleting at least one of the plurality of connected domains that does not meet a preset condition and fitting a remaining of the plurality of connected domains that meets a preset condition, wherein a fitted connected domain included in the target detection result represents the detected lane line in the first picture.

2. The method according to claim 1, wherein the obtaining the first feature map by inputting the first picture into the first convolutional layer comprises:

obtaining the first feature map by inputting the first picture with a resolution less than or equal to a first preset resolution into the first convolutional layer;

wherein the first preset resolution is set based on a manual operation, or based on a computational power of the target neural network model, or based on an original resolution of an image or video stream to which the first picture corresponds.

3. The method according to claim 1, wherein the obtaining the second feature map by inputting the first feature map into the second convolutional layer comprises:

obtaining a first type feature map and a plurality of second type feature maps by inputting the first feature map into the second convolutional layer and by performing a convolution operation on the first feature map with a plurality of convolutional kernels of different sizes included in the second convolution layer;

determining a plurality of third type feature maps from the plurality of second type feature maps through a preset statistical method, wherein the plurality of third type feature maps are configured to be performed with a second preset processing such that sizes of the plurality of third type feature maps match each other, the plurality of third type feature maps are configured to be performed with a third preset processing to obtain an attention feature map, and a size of the attention feature map matches a size of the first type feature map; and

obtaining the second feature map by performing the third preset processing on the attention feature map and the first type feature map.

4. The method according to claim 1, before the obtaining (S204) the target feature map by inputting the first picture into the target neural network model, further comprising:

obtaining a first sample picture and a label picture corresponding to the first sample picture; and

obtaining the target neural network model by training a to-be-trained initial neutral network model with the first sample picture and the label picture, wherein the target neural network model is configured to be trained through a loss function as follows:

$$loss = C\left(l_p, l_t\right) + \alpha \; C(b_p, \; b_t)$$

where C represents a cross entropy loss function, $l_p$ represents a lane line pixel obtained by inputting the first sample picture into the to-be-trained initial neural network model, $l_t$ represents a lane line pixel marked by the label picture, $b_p$ represents an image background pixel obtained by inputting the first sample picture into the to-be-trained initial neural network model, $b_t$ represents an image background pixel marked by the label picture, and $\alpha$ is a preset parameter greater than 0.

5. The method according to claim 1, further comprising:
re-determining the detected lane line in the first picture by like-for-like merging the fitted connected domain included in the target detection result by a clustering algorithm.

6. The method according any one of claims 1-5, wherein the target neural network model comprises a neural network model comprising a lightweight convolutional neural network.

7. A lane line detection apparatus based on deep learning, comprising:

an obtaining module (1002), configured to obtain a first picture that is planned to be detected;

a first processing module (1004), configured to obtain a target feature map by inputting the first picture into a target neural network model; wherein the target neural network model comprises a neural network model generated based on a multi-scale attention mechanism and a deep separable convolution model, and the target feature map is configured to represent a probability of each pixel in the first picture being a lane line pixel; and

a second processing module (1006), configured to obtain a target detection result by performing an image post-processing on the target feature map; wherein the target detection result is configured to indicate a detected lane line in the first picture;

wherein in the obtaining a target feature map by inputting the first picture into a target neural network model, the first processing module (1004) is specifically configured to:

obtain a first feature map by inputting the first picture into a first convolutional layer;

obtain a second feature map by inputting the first feature map into a second convolutional layer, wherein the target neural network model comprises the second convolutional layer, and the second convolutional layer is configured to increase a weight of a preset region in the first feature map based on the multi-scale attention mechanism; and

obtain the target feature map by performing a first preset processing on the second feature map, wherein the first preset processing comprises an up-sampling operation;

**characterized in that** in the obtaining a first feature map by inputting the first picture into a first convolutional layer, the first processing module (1004) is specifically configured to:

obtain a first sub-feature map by inputting the first picture into a first sub-convolutional layer, wherein the first sub-convolutional layer is configured to perform a convolution operation, and the first convolutional layer comprises the first sub-convolutional layer;

obtain a second sub-feature map by inputting the first sub-feature map into a second sub-convolutional layer, wherein the second sub-convolutional layer is configured to perform a depth separable convolution operation to extract feature information of the first sub-feature map, and the first convolutional layer comprises the second sub-convolutional layer;

in response to a resolution of the second sub-feature map being greater than a second preset resolution, reduce a resolution of the first sub-feature map by re-inputting the second sub-feature map into the first sub-convolutional layer; and

in response to the resolution of the second sub-feature map being less than or equal to the second preset resolution, determine the second sub-feature map to be the first feature map;

in the obtaining a second sub-feature map by inputting the first sub-feature map into a second sub-convolutional layer, the first processing module (1004) is specifically configured to:

obtain the second sub-feature map by extracting the feature information of the first sub-feature map with a $1 \times n$ convolution kernel and by extracting the feature information of the first sub-feature map with an $n \times 1$ convolution kernel, wherein the n is a positive odd number greater than 1;

in the obtaining a target detection result by performing an image post-processing on the target feature map, the second processing module (1006) is specifically configured to:

obtain a lane line result segmentation map by performing a binarization processing on the target feature map;

obtain a processed lane line result segmentation map containing a plurality of connected domains by preprocessing the lane line result segmentation map with an image erosion operation and an image dilation operation; and

obtain a target detection result by deleting at least one of the plurality of connected domains that does not meet a preset condition and fitting a remaining of the plurality of connected domains that meets a preset condition, wherein a fitted connected domain included in the target detection result represents the detected lane line in the first picture.

8. A computer-readable storage medium, storing a computer program; wherein the computer program is configured to perform the method according to any one of claims 1-6 when executed.

9. An electronic device, comprising a processor, a memory, and a computer program stored in the memory and executable on the processor; wherein the processor is configured to perform the method according to any one of claims 1-6 when executing the computer program.

**Patentansprüche**

1. Ein Fahrspurlinienerkennungsverfahren auf Basis von Tiefenlernen, umfassend:

Erhalten (S202) eines ersten Bildes, das zur Detektion vorgesehen ist;

Erhalten (S204) einer Ziel-Merkmalskarte durch Eingabe des ersten Bildes in ein Ziel-Neuronales-Netzwerkmodell; wobei das Ziel-Neuronale-Netzwerkmodell ein auf einem Multi-Skalen-Aufmerksamkeitsmechanismus und einem tiefen trennbaren Faltungsmodell basierendes neuronales Netzwerkmodell umfasst, und wobei die Ziel-Merkmalskarte dazu eingerichtet ist, eine Wahrscheinlichkeit dafür darzustellen, dass jedes Pixel in dem ersten Bild ein Fahrspurlinienpixel ist; und

Erhalten (S206) eines Ziel-Detektionsergebnisses durch Durchführen einer Bildnachverarbeitung an der Ziel-Merkmalskarte; wobei das Ziel-Detektionsergebnis dazu eingerichtet ist, eine detektierte Fahrspurlinie in dem ersten Bild anzuzeigen.

wobei Erhalten (S204) einer Ziel-Merkmalskarte durch Eingabe des ersten Bildes in ein Ziel-Neuronales-Netzwerkmodell umfasst:

Erhalten einer ersten Merkmalskarte durch Eingabe des ersten Bildes in eine erste Faltungsschicht;
Erhalten einer zweiten Merkmalskarte durch Eingabe der ersten Merkmalskarte in eine zweite Faltungsschicht, wobei das Ziel-Neuronale-Netzwerkmodell die zweite Faltungsschicht umfasst, und wobei die zweite Faltungsschicht dazu eingerichtet ist, ein Gewicht eines vorgegebenen Bereichs in der ersten Merkmalskarte basierend auf dem Multi-Skalen-Aufmerksamkeitsmechanismus zu erhöhen; und
Erhalten der Ziel-Merkmalskarte durch Durchführen einer ersten vorgegebenen Verarbeitung an der zweiten Merkmalskarte, wobei die erste vorgegebene Verarbeitung eine Hochabtastungsoperation umfasst;
**dadurch gekennzeichnet, dass** das Erhalten einer ersten Merkmalskarte durch Eingabe des ersten Bildes in eine erste Faltungsschicht umfasst:

Erhalten einer ersten Unter-Merkmalskarte durch Eingabe des ersten Bildes in eine erste Unter-Faltungsschicht, wobei die erste Unter-Faltungsschicht dazu eingerichtet ist, eine Faltungsoperation durchzuführen, und wobei die erste Faltungsschicht die erste Unter-Faltungsschicht umfasst;
Erhalten einer zweiten Unter-Merkmalskarte durch Eingabe der ersten Unter-Merkmalskarte in eine zweite Unter-Faltungsschicht, wobei die zweite Unter-Faltungsschicht dazu eingerichtet ist, eine tief trennbare Faltungsoperation (Depth Separable Convolution) durchzuführen, um Merkmalsinformationen der ersten Unter-Merkmalskarte zu extrahieren, und wobei die erste Faltungsschicht die zweite Unter-Faltungsschicht umfasst;
wobei, als Reaktion darauf, dass eine Auflösung der zweiten Unter-Merkmalskarte größer als eine zweite vorgegebene Auflösung ist, die Auflösung der ersten Unter-Merkmalskarte durch erneute Eingabe der zweiten Unter-Merkmalskarte in die erste Unter-Faltungsschicht reduziert wird; und
wobei, als Reaktion darauf, dass die Auflösung der zweiten Unter-Merkmalskarte kleiner oder gleich der zweiten vorgegebenen Auflösung ist, die zweite Unter-Merkmalskarte als die erste Merkmalskarte bestimmt wird;
wobei Erhalten der zweiten Unter-Merkmalskarte durch Eingabe der ersten Unter-Merkmalskarte in eine zweite Unter-Faltungsschicht umfasst:

Erhalten der zweiten Unter-Merkmalskarte durch Extrahieren der Merkmalsinformationen der ersten Unter-Merkmalskarte mit einem $I \times n$ Faltungskern und durch Extrahieren der Merkmalsinformationen der ersten Unter-Merkmalskarte mit einem $n \times I$ Faltungskern, wobei n eine positive ungerade Zahl größer als 1 ist;
wobei Erhalten (S206) eines Ziel-Detektionsergebnisses durch Durchführen einer Bildnachverarbeitung an der Ziel-Merkmalskarte umfasst:

Erhalten einer Fahrspurlinien-Ergebnis-Segmentierungskarte durch Durchführen einer Binarisierungsverarbeitung an der Ziel-Merkmalskarte;
Erhalten einer verarbeiteten Fahrspurlinien-Ergebnis-Segmentierungskarte, die eine Mehrzahl verbundener Bereiche enthält, durch Vorverarbeiten der Fahrspurlinien-Ergebnis-Segmentierungskarte mit einer Bild-Erosionsoperation und einer Bild-Dilatationsoperation; und
Erhalten eines Ziel-Detektionsergebnisses durch Löschen von mindestens einem der Mehrzahl verbundener Bereiche, die eine vorgegebene Bedingung nicht erfüllen, und Anpassen der übrigen Mehrzahl verbundener Bereiche, die eine vorgegebene Bedingung erfüllen, wobei ein angepasster verbundener Bereich, der in dem Ziel-Detektionsergebnis enthalten ist, die detektierte Fahrspurlinie in dem ersten Bild darstellt.

2. Das Verfahren gemäß Anspruch 1, wobei Erhalten der ersten Merkmalskarte durch Eingabe des ersten Bildes in die erste Faltungsschicht umfasst:

Erhalten der ersten Merkmalskarte durch Eingabe des ersten Bildes mit einer Auflösung kleiner oder gleich einer ersten vorgegebenen Auflösung in die erste Faltungsschicht;
wobei die erste vorgegebene Auflösung basierend auf einer manuellen Operation, oder basierend auf einer Rechenleistung des Ziel-Neuronalen-Netzwerkmodells, oder basierend auf einer ursprünglichen Auflösung eines Bild- oder Videostreams, dem das erste Bild entspricht, festgelegt ist.

3. Das Verfahren gemäß Anspruch 1, wobei Erhalten der zweiten Merkmalskarte durch Eingabe der ersten Merkmalskarte in die zweite Faltungsschicht umfasst:

Erhalten einer Merkmalskarte des ersten Typs und einer Mehrzahl von Merkmalskarten des zweiten Typs durch Eingabe der ersten Merkmalskarte in die zweite Faltungsschicht und durch Durchführen einer Faltungsoperation an der ersten Merkmalskarte mit einer Mehrzahl von Faltungskernen unterschiedlicher Größe, die in der zweiten Faltungsschicht enthalten sind;

Bestimmung einer Mehrzahl von Merkmalskarten des dritten Typs aus der Mehrzahl von Merkmalskarten des zweiten Typs durch ein vorgegebenes statistisches Verfahren, wobei die Mehrzahl von Merkmalskarten des dritten Typs dazu eingerichtet ist, mit einer zweiten vorgegebenen Verarbeitung durchgeführt zu werden, sodass die Größen der Mehrzahl von Merkmalskarten des dritten Typs zueinander passen, die Mehrzahl von Merkmalskarten des dritten Typs dazu eingerichtet ist, mit einer dritten vorgegebenen Verarbeitung durchgeführt zu werden, um eine Aufmerksamkeits-Merkmalskarte zu erhalten, und wobei eine Größe der Aufmerksamkeits-Merkmalskarte mit der Größe der Merkmalskarte des ersten Typs übereinstimmt; und

Erhalten der zweiten Merkmalskarte durch Durchführen der dritten vorgegebenen Verarbeitung an der Aufmerksamkeits-Merkmalskarte und der Merkmalskarte des ersten Typs.

4. Das Verfahren gemäß Anspruch 1, vor dem Erhalten (S204) der Ziel-Merkmalskarte durch Eingabe des ersten Bildes in das Ziel-Neuronale-Netzwerkmodell, umfassend ferner:

Erhalten eines ersten Beispielbildes und eines Label-Bildes, das dem ersten Beispielbild entspricht; und

Erhalten des Ziel-Neuronalen-Netzwerkmodells durch Trainieren eines zu trainierenden initialen Neuronalen-Netzwerkmodells mit dem ersten Beispielbild und dem Label-Bild, wobei das Ziel-Neuronale-Netzwerkmodell dazu eingerichtet ist, durch eine Verlustfunktion wie folgt trainiert zu werden:

$$loss = C(l_p, l_t) + \alpha\ C(b_p, b_t)$$

wobei C eine Kreuzentropie-Verlustfunktion darstellt, $l_p$ ein Fahrspurlinienpixel ist, das durch Eingabe des ersten Beispielbildes in das zu trainierende initiale Neuronale-Netzwerkmodell erhalten wird, $l_t$ ein Fahrspurlinienpixel ist, das durch das Label-Bild markiert ist, $b_p$ ein Bild-Hintergrundpixel ist, das durch Eingabe des ersten Beispielbildes in das zu trainierende initiale Neuronale-Netzwerkmodell erhalten wird, bt ein Bild-Hintergrundpixel ist, das durch das Label-Bild markiert ist, und $\alpha$ ein vorgegebener Parameter größer als 0 ist.

5. Das Verfahren gemäß Anspruch 1, umfassend ferner:
Neu-Bestimmung der detektierten Fahrspurlinie in dem ersten Bild durch gleichartiges Zusammenführen des angepassten verbundenen Bereichs, der in dem Ziel-Detektionsergebnis enthalten ist, mittels eines Clustering-Algorithmus.

6. Das Verfahren gemäß einem der Ansprüche 1 bis 5, wobei das Ziel-Neuronale-Netzwerkmodell ein neuronales Netzwerkmodell umfasst, das ein leichtgewichtiges Faltungsneuronales Netzwerk enthält.

7. Eine Fahrspurlinien-Erkennungsvorrichtung auf Basis von Tiefenlernen, umfassend:

ein Erhaltungsmodul (1002), dazu eingerichtet, ein erstes Bild zu erhalten, das detektiert werden soll;

ein erstes Verarbeitungsmodul (1004), dazu eingerichtet, eine Ziel-Merkmalskarte zu erhalten, indem das erste Bild in ein Ziel-Neuronales-Netzwerkmodell eingegeben wird; wobei das Ziel-Neuronale-Netzwerkmodell ein auf einem Multi-Skalen-Attentions-Mechanismus und einem tiefen trennbaren Faltungsmodell basierendes neuronales Netzwerkmodell umfasst, und wobei die Ziel-Merkmalskarte dazu eingerichtet ist, eine Wahrscheinlichkeit dafür darzustellen, dass jedes Pixel in dem ersten Bild ein Fahrspurlinienpixel ist; und

ein zweites Verarbeitungsmodul (1006), dazu eingerichtet, ein Ziel-Detektionsergebnis zu erhalten, indem eine Bildnachverarbeitung an der Ziel-Merkmalskarte durchgeführt wird; wobei das Ziel-Detektionsergebnis dazu eingerichtet ist, eine detektierte Fahrspurlinie in dem ersten Bild anzuzeigen;

wobei beim Erhalten der Ziel-Merkmalskarte durch Eingabe des ersten Bildes in das Ziel-Neuronale-Netzwerkmodell das erste Verarbeitungsmodul (1004) speziell dazu eingerichtet ist, folgende Schritte auszuführen:

Erhalten der ersten Merkmalskarte durch Eingabe des ersten Bildes in eine erste Faltungsschicht;

Erhalten der zweiten Merkmalskarte durch Eingabe der ersten Merkmalskarte in eine zweite Faltungsschicht, wobei das Ziel-Neuronale-Netzwerkmodell die zweite Faltungsschicht umfasst, und wobei die zweite Faltungsschicht dazu eingerichtet ist, ein Gewicht eines vorgegebenen Bereichs in der ersten Merkmalskarte basierend auf dem Multi-Skalen-Attentions-Mechanismus zu erhöhen; und

Erhalten der Ziel-Merkmalskarte durch Durchführen einer ersten vorgegebenen Verarbeitung an der zweiten Merkmalskarte, wobei die erste vorgegebene Verarbeitung eine Hochabtastungsoperation umfasst;

**gekennzeichnet dadurch, dass** beim Erhalten einer ersten Merkmalskarte durch Eingabe des ersten Bildes in eine erste Faltungsschicht das erste Verarbeitungsmodul (1004) speziell dazu eingerichtet ist, folgende Schritte auszuführen:

Erhalten einer ersten Unter-Merkmalskarte durch Eingabe des ersten Bildes in eine erste Unter-Faltungsschicht, wobei die erste Unter-Faltungsschicht dazu eingerichtet ist, eine Faltungsoperation durchzuführen, und wobei die erste Faltungsschicht die erste Unter-Faltungsschicht umfasst;

Erhalten einer zweiten Unter-Merkmalskarte durch Eingabe der ersten Unter-Merkmalskarte in eine zweite Unter-Faltungsschicht, wobei die zweite Unter-Faltungsschicht dazu eingerichtet ist, eine tief trennbare Faltungsoperation durchzuführen, um Merkmalsinformationen der ersten Unter-Merkmalskarte zu extrahieren, und wobei die erste Faltungsschicht die zweite Unter-Faltungsschicht umfasst;

Falls die Auflösung der zweiten Unter-Merkmalskarte größer als eine zweite vorgegebene Auflösung ist, Reduzieren der Auflösung der ersten Unter-Merkmalskarte durch erneute Eingabe der zweiten Unter-Merkmalskarte in die erste Unter-Faltungsschicht; und

Falls die Auflösung der zweiten Unter-Merkmalskarte kleiner oder gleich der zweiten vorgegebenen Auflösung ist, Bestimmen der zweiten Unter-Merkmalskarte als die erste Merkmalskarte;

wobei beim Erhalten der zweiten Unter-Merkmalskarte durch Eingabe der ersten Unter-Merkmalskarte in eine zweite Unter-Faltungsschicht das erste Verarbeitungsmodul (1004) speziell dazu eingerichtet ist, folgenden Schritt auszuführen:

Erhalten der zweiten Unter-Merkmalskarte durch Extrahieren der Merkmalsinformationen der ersten Unter-Merkmalskarte mit einem l$\times$n-Faltungskern und durch Extrahieren der Merkmalsinformationen der ersten Unter-Merkmalskarte mit einem n$\times$l-Faltungskern, wobei n eine positive ungerade Zahl größer als 1 ist;

wobei beim Erhalten eines Ziel-Detektionsergebnisses durch Durchführen einer Bildnachverarbeitung an der Ziel-Merkmalskarte das zweite Verarbeitungsmodul (1006) speziell dazu eingerichtet ist, folgende Schritte auszuführen:

Erhalten einer Fahrspurlinien-Ergebnis-Segmentierungskarte durch Durchführen einer Binarisierungsverarbeitung an der Ziel-Merkmalskarte;

Erhalten einer bearbeiteten Fahrspurlinien-Ergebnis-Segmentierungskarte, die eine Vielzahl verbundener Bereiche enthält, durch Vorverarbeiten der Fahrspurlinien-Ergebnis-Segmentierungskarte mittels einer Bild-Erosionsoperation und einer Bild-Dilatationsoperation; und

Erhalten eines Ziel-Detektionsergebnisses durch Löschen von mindestens einem der zahlreichen verbundenen Bereiche, das eine vorgegebene Bedingung nicht erfüllt, und Anpassen der verbleibenden verbundenen Bereiche, die eine vorgegebene Bedingung erfüllen, wobei ein angepasster verbundener Bereich, der im Ziel-Detektionsergebnis enthalten ist, die detektierte Fahrspurlinie im ersten Bild darstellt;

8. Ein computerlesbares Speichermedium, auf dem ein Computerprogramm gespeichert ist; wobei das Computerprogramm dazu konfiguriert ist, beim Ausführen das Verfahren gemäß einem der Ansprüche 1-6 durchzuführen.

9. Eine elektronische Vorrichtung, umfassend einen Prozessor, einen Speicher und ein im Speicher gespeichertes und auf dem Prozessor ausführbares Computerprogramm; wobei der Prozessor dazu konfiguriert ist, beim Ausführen des Computerprogramms das Verfahren gemäß einem der Ansprüche 1-6 durchzuführen.

**Revendications**

1. Un procédé de détection de ligne de voie basé sur un apprentissage profond, comprenant :

l'obtention (S202) d'une première image qui doit être détectée ;

l'obtention (S204) d'une carte de caractéristiques cible en entrant la première image dans un modèle de réseau neuronal cible, le modèle de réseau neuronal cible comprenant un modèle de réseau neuronal généré sur la base d'un mécanisme d'attention multi-échelle et d'un modèle de convolution profonde séparable, et la carte de caractéristiques cible étant configurée pour représenter la probabilité que chaque pixel de la première image soit un pixel de ligne de voie ; et

l'obtention (S206) d'un résultat de détection cible en effectuant un post-traitement d'image sur la carte de caractéristiques cible, le résultat de détection étant configuré pour indiquer une ligne de voie détectée dans la première image ;

dans lequel l'obtention (S204) d'une carte de caractéristiques cible en entrant la première image dans un modèle de réseau neuronal cible comprend :

l'obtention d'une première carte de caractéristiques en entrant la première image dans une première couche convolutive ;

l'obtention d'une seconde carte de caractéristiques en entrant la première carte de caractéristiques dans une seconde couche convolutive, où le modèle de réseau neuronal cible comprend la seconde couche convolutive, et la seconde couche convolutive est configurée pour augmenter la pondération d'une région prédéfinie dans la première carte de caractéristiques sur la base du mécanisme d'attention multi-échelle ; et

l'obtention de la carte de caractéristiques cible en effectuant un premier traitement prédéfini sur la seconde carte de caractéristiques, où le premier traitement prédéfini comprend une opération de suréchantillonnage ; **caractérisé en ce que** l'obtention d'une première carte de caractéristiques en entrant la première image dans une première couche convolutive comprend :

l'obtention d'une première sous-carte de caractéristiques en entrant la première image dans une première sous-couche convolutive, où la première sous-couche convolutive est configurée pour effectuer une opération de convolution, et la première couche convolutive comprend la première sous-couche convolutive ;

l'obtention d'une seconde sous-carte de caractéristiques en entrant la première sous-carte de caractéristiques dans une seconde sous-couche convolutive, où la seconde sous-couche convolutive est configurée pour effectuer une opération de convolution profonde séparable afin d'extraire les informations de caractéristiques de la première sous-carte de caractéristiques, et la première couche convolutive comprend la seconde sous-couche convolutive ;

dans le cas où la résolution de la seconde sous-carte de caractéristiques est supérieure à une seconde résolution prédéfinie, la réduction de la résolution de la première sous-carte de caractéristiques par la réintroduction de la seconde sous-carte de caractéristiques dans la première sous-couche convolutive ; et

dans le cas où la résolution de la seconde sous-carte de caractéristiques est inférieure ou égale à la seconde résolution prédéfinie, la détermination de la seconde sous-carte de caractéristiques comme constituant la première carte de caractéristiques ;

l'obtention d'une seconde sous-carte de caractéristiques en entrant la première sous-carte de caractéristiques dans une seconde sous-couche convolutive comprend :

l'obtention de la seconde sous-carte de caractéristiques en extrayant les informations de caractéristiques de la première sous-carte de caractéristiques avec un noyau de convolution de taille $l \times n$ et en extrayant les informations de caractéristiques de la première sous-carte de caractéristiques avec un noyau de convolution de taille $n \times l$, dans lequel n est un nombre impair positif supérieur à 1

l'obtention (S206) d'un résultat de détection cible en effectuant un post-traitement d'image sur la carte de caractéristiques cible comprend :

l'obtention d'une carte de segmentation du résultat de ligne de voie en effectuant un traitement de binarisation sur la carte de caractéristiques cible ;

l'obtention d'une carte de segmentation du résultat de ligne de voie traitée contenant une pluralité de domaines connectés en prétraitant la carte de segmentation du résultat de ligne de voie avec une opération d'érosion d'image et une opération de dilatation d'image ; et

l'obtention d'un résultat de détection cible en supprimant au moins un des domaines connectés qui ne satisfait pas une condition prédéfinie et en ajustant les domaines connectés restants qui satisfont une condition prédéfinie, où un domaine connecté ajusté inclus dans le résultat de détection cible représente la ligne de voie détectée dans la première image ;

2. Le procédé selon la revendication 1, dans lequel l'obtention de la première carte de caractéristiques en entrant la première image dans la première couche convolutive comprend :

l'obtention de la première carte de caractéristiques en entrant la première image avec une résolution inférieure ou égale à une première résolution prédéfinie dans la première couche convolutive ;
où la première résolution prédéfinie est fixée sur la base d'une opération manuelle, ou sur la base de la puissance de calcul du modèle de réseau neuronal cible, ou sur la base de la résolution originale d'une image ou d'un flux vidéo auquel la première image correspond ;

3. Le procédé selon la revendication 1, dans lequel l'obtention de la seconde carte de caractéristiques en entrant la première carte de caractéristiques dans la seconde couche convolutive comprend :

l'obtention d'une carte de caractéristiques de premier type et une pluralité de cartes de caractéristiques de second type en entrant la première carte de caractéristiques dans la seconde couche convolutive et en effectuant une opération de convolution sur la première carte de caractéristiques avec une pluralité de noyaux de convolution de tailles différentes inclus dans la seconde couche convolutive ;
la détermination d'une pluralité de cartes de caractéristiques de troisième type à partir de la pluralité de cartes de caractéristiques de second type par un procédé statistique prédéfini, où la pluralité de cartes de caractéristiques de troisième type est configurée pour subir un second traitement prédéfini de sorte que les tailles de la pluralité de cartes de caractéristiques de troisième type correspondent entre elles, la pluralité de cartes de caractéristiques de troisième type est configurée pour subir un troisième traitement prédéfini afin d'obtenir une carte de caractéristiques d'attention, et la taille de la carte de caractéristiques d'attention correspond à la taille de la carte de caractéristiques de premier type ; et
l'obtention de la seconde carte de caractéristiques en effectuant le troisième traitement prédéfini sur la carte de caractéristiques d'attention et sur la carte de caractéristiques de premier type ;

4. Le procédé selon la revendication 1, avant l'obtention (S204) de la carte de caractéristiques cible en entrant la première image dans le modèle de réseau neuronal cible, comprend en outre :

l'obtention d'une première image d'échantillon et une image d'étiquette correspondant à la première image d'échantillon ; et
l'obtention du modèle de réseau neuronal cible en entraînant un modèle de réseau neuronal initial à entraîner avec la première image d'échantillon et l'image d'étiquette, où le modèle de réseau neuronal cible est configuré pour être entraîné via une fonction de perte comme suit :

$$loss = C(l_{p,}\ l_t) + \alpha\ C(b_p,\ b_t)$$

où C représente une fonction de perte d'entropie croisée, $l_p$ représente un pixel de ligne de voie obtenu en entrant la première image d'échantillon dans le modèle de réseau neuronal initial à entraîner, $l_t$ représente un pixel de ligne de voie marqué par l'image d'étiquette, $b_p$ représente un pixel d'arrière-plan de l'image obtenu en entrant la première image d'échantillon dans le modèle de réseau neuronal initial à entraîner, bt représente un pixel d'arrière-plan de l'image marqué par l'image d'étiquette, et $\alpha$ est un paramètre prédéfini supérieur à 0.

5. Le procédé selon la revendication 1, comprenant en outre :
la redétermination de la ligne de voie détectée dans la première image en fusionnant de manière homogène le domaine connecté ajusté inclus dans le résultat de détection cible par un algorithme de regroupement ;

6. Le procédé selon l'une quelconque des revendications 1 à 5, dans lequel le modèle de réseau neuronal cible comprend un modèle de réseau neuronal comprenant un réseau neuronal convolutif léger ;

7. Un dispositif de détection de ligne de voie basé sur l'apprentissage profond, comprenant :

un module d'obtention (1002), configuré pour obtenir une première image devant être détectée ;
un premier module de traitement (1004), configuré pour obtenir une carte de caractéristiques cible en entrant la première image dans un modèle de réseau neuronal cible, dans lequel le modèle de réseau neuronal cible comprend un modèle de réseau neuronal généré sur la base d'un mécanisme d'attention multi-échelle et d'un modèle de convolution profonde séparable, et la carte de caractéristiques cible est configurée pour représenter la probabilité que chaque pixel de la première image soit un pixel de ligne de voie ; et

un second module de traitement (1006), configuré pour obtenir un résultat de détection cible en effectuant un post-traitement d'image sur la carte de caractéristiques cible, dans lequel le résultat de détection cible est configuré pour indiquer une ligne de voie détectée dans la première image ;

où, dans l'obtention de la carte de caractéristiques cible en entrant la première image dans le modèle de réseau neuronal cible, le premier module de traitement (1004) est spécifiquement configuré pour :

obtenir une première carte de caractéristiques en entrant la première image dans une première couche convolutive ;

obtenir une seconde carte de caractéristiques en entrant la première carte de caractéristiques dans une seconde couche convolutive, où le modèle de réseau neuronal cible comprend la seconde couche convolutive, et la seconde couche convolutive est configurée pour augmenter la pondération d'une région prédéfinie dans la première carte de caractéristiques sur la base du mécanisme d'attention multi-échelle ; et

obtenir la carte de caractéristiques cible en effectuant un premier traitement prédéfini sur la seconde carte de caractéristiques, où le premier traitement prédéfini comprend une opération de suréchantillonnage ;

**caractérisé en ce que**, dans l'obtention d'une première carte de caractéristiques en entrant la première image dans une première couche convolutive, le premier module de traitement (1004) est spécifiquement configuré pour :

obtenir une première sous-carte de caractéristiques en entrant la première image dans une première sous-couche convolutive, où la première sous-couche convolutive est configurée pour effectuer une opération de convolution, et la première couche convolutive comprend la première sous-couche convolutive ;

obtenir une seconde sous-carte de caractéristiques en entrant la première sous-carte de caractéristiques dans une seconde sous-couche convolutive, où la seconde sous-couche convolutive est configurée pour effectuer une opération de convolution profonde séparable afin d'extraire les informations de caractéristiques de la première sous-carte de caractéristiques, et la première couche convolutive comprend la seconde sous-couche convolutive ;

dans le cas où la résolution de la seconde sous-carte de caractéristiques est supérieure à une seconde résolution prédéfinie, réduire la résolution de la première sous-carte de caractéristiques en réintroduisant la seconde sous-carte de caractéristiques dans la première sous-couche convolutive ; et

dans le cas où la résolution de la seconde sous-carte de caractéristiques est inférieure ou égale à la seconde résolution prédéfinie, déterminer que la seconde sous-carte de caractéristiques constitue la première carte de caractéristiques ;

dans l'obtention d'une seconde sous-carte de caractéristiques en entrant la première sous-carte de caractéristiques dans une seconde sous-couche convolutive, le premier module de traitement (1004) est spécifiquement configuré pour :

obtenir la seconde sous-carte de caractéristiques en extrayant les informations de caractéristiques de la première sous-carte de caractéristiques avec un noyau de convolution de taille l$\times$n et en extrayant les informations de caractéristiques de la première sous-carte de caractéristiques avec un noyau de convolution de taille n$\times$l, dans lequel n est un nombre impair positif supérieur à 1 ;

dans l'obtention d'un résultat de détection cible en effectuant un post-traitement d'image sur la carte de caractéristiques cible, le deuxième module de traitement (1006) est spécifiquement configuré pour :

obtenir une carte de segmentation du résultat de ligne de voie en effectuant un traitement de binarisation sur la carte de caractéristiques cible ;

obtenir une carte de segmentation du résultat de ligne de voie traitée contenant une pluralité de domaines connectés en prétraitant la carte de segmentation du résultat de ligne de voie avec une opération d'érosion d'image et une opération de dilatation d'image ; et

obtenir un résultat de détection cible en supprimant au moins un des domaines connectés qui ne satisfait pas une condition prédéfinie et en ajustant les domaines connectés restants qui satisfont une condition prédéfinie, où un domaine connecté ajusté inclus dans le résultat de détection cible représente la ligne de voie détectée dans la première image ;

8. Un support de stockage lisible par ordinateur, stockant un programme informatique, dans lequel le programme informatique est configuré pour exécuter le procédé selon l'une quelconque des revendications 1 à 6 lorsqu'il est exécuté ;

9. Un dispositif électronique, comprenant un processeur, une mémoire et un programme informatique stocké dans la mémoire et exécutable par le processeur, dans lequel le processeur est configuré pour exécuter le procédé selon l'une quelconque des revendications 1 à 6 lors de l'exécution du programme informatique ;

FIG. 1

A first picture that is planned to be detected is obtained. — S202

A target feature map is obtained by inputting the first picture into a target neural network model; wherein the target neural network model includes a neural network model generated based on a multi-scale attention mechanism and a deep separable convolution model, and the target feature map is configured to represent a probability of each pixel in the first picture being a lane line pixel. — S204

A target detection result is obtained by performing an image post-processing on the target feature map; wherein the target detection result is configured to indicate a detected lane line in the first picture. — S206

FIG. 2

Connected domain 302

Height

Width

FIG. 3

(a)　　　　　　　　　(b)　　　　　　　　　(c)

FIG. 4

Candidate
lane line

FIG. 5

Angle range between
left lane line and
horizontal direction

Angle range between
right lane line and
horizontal direction

Horizontal direction

FIG. 6

FIG. 7

FIG. 8

S902 — Network outputting

S904 — Corrosion and dilation processing

S906 — Connected domain fitering

S908 — Marking connected domain with ID

S910 — Fitting lane line according to connected domain

S912 — Fitting lane line according to angle range

S914 — Clustering to obtain final lane line

S916 — Outputting detection result

FIG. 9

Obtaining module 1002

First processing module 1004

Second processing module 1006

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOU YUENAN**. *Learning Lightweight Lane Detection CNNs by Self Attention Distillation*